(19) Europäisches Patentamt
European Patent Office
Office européen des brevets

(11) **EP 2 469 762 A1**

(12) **EUROPEAN PATENT APPLICATION**

(43) Date of publication:
**27.06.2012 Bulletin 2012/26**

(51) Int Cl.:
***H04L 12/26*** (2006.01)   ***H04L 12/24*** (2006.01)
***H04L 12/56*** (2006.01)

(21) Application number: **10252221.6**

(22) Date of filing: **24.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **British Telecommunications Public
Limited Company
London EC1A 7AJ (GB)**

(72) Inventor: **The designation of the inventor has not
yet been filed**

(74) Representative: **Lidbetter, Timothy Guy Edwin et
al
BT Group Legal
Intellectual Property Department
PP C5A, BT Centre
81 Newgate Street
London
EC1A 7AJ (GB)**

(54) **Communications network management**

(57) The present invention provides a segmented network in which each segment comprises one or more routers, one or more communications links to provide connectivity between the router(s) and a segment management module. The segment management module uses operational data to predict the future performance of each element. If the predicted performance will breach a threshold value then a data flow may be re-routed. Re-routing between different segments can lead to network management problems and so the present invention discloses methods by which: segments can expand to acquire a router from another segment; segments can subdivide; and segments can merge together, particularly if a segment comprises too few routers.

Figure 6

## Description

The present invention relates to the operation of communications networks and in particular to the autonomic operation of communications networks.

It will be understood that there are a number of different approaches to network capacity management for communications networks. If the network is yet to be built, then over-provisioning is the easiest method. Network capacity can be determined on the basis of network demands forecasts and modelling, with the expectation that the demand placed upon the network does not exceed the provisioned limit. The process of putting in more capacity once this limit has been exceeded is laborious and might even require engineers to lay more cable and connect them back into the network. Evidently, this method is very static.

Alternatively, once a network becomes overloaded, services undergo admission control at the edge of a congested network based on current availability in the network to accommodate the incoming new flow. This technique is as old as the Public Switched Telephone Network (PSTN) and has been implemented using logical units such as Bandwidth Brokers and protocols such as RSVP (within the Integrated Services framework). Traditional call admission only looks at allowing a service/flow access into the network. It does not address the problem of gradual underperformance of a service while being assigned to a specific sequence of resources. This becomes increasingly important when the number of services delivered on the IP networks and the variety in the Quality of Service guarantees they require expands with the introduction of TV and gaming content from numerous content providers.

According to a first aspect of the present invention there is provided a communications network, the communications network being partitioned into a plurality of network segments, each of the plurality of the network segments comprising a segment management module, a plurality of network elements and a plurality of communications links, the plurality of network elements being interconnected by the plurality of communications links, the network being configured such that, in operation: i) each of the segment management modules receives operational data from the plurality of network elements in its respective network segment; ii) on the basis of operational data received from the plurality of network elements, each segment management module determines the future performance of the plurality of network elements in the respective network segment; iii) if a segment management module determines that the future performance of one or more of the plurality of network elements in the respective network segment will be less than a threshold value, re-routing one or more data flows, to a further segment; and iv) reconfiguring one or more of the segments carrying the one or more data flows.

According to a second aspect of the present invention there is provided a method of operating a communications network, the communications network being partitioned into a plurality of network segments; each of the plurality of the network segments comprising: a segment management module; a plurality of network elements; and a plurality of communications links, the plurality of network elements being interconnected by the plurality of communications links, the method comprising the steps of: i) each of the segment management modules receiving operational data from the plurality of network elements in its respective network segment; ii) each of the segment management module determining the future performance of the plurality of network elements in the respective network segment on the basis of operational data received from the plurality of network elements; iii) if a segment management module determines that the future performance of one or more of the plurality of network elements in the respective network segment will be less than a threshold value, re-routing one or more data flows, to a further segment; and iv) reconfiguring one or more of the segments carrying the one or more data flows.

According to a third aspect of the present invention there is provided a data carrier device comprising computer executable code for performing a method as described above.

We now propose, however, a mechanism to do this such that once a handover is decided upon, the original Tier 1 entity, Tier $1_1$ in this example, actually takes over monitoring control over a virtual division of the link, assigned for this service. This method therefore achieves 'breathing' of control layer entities where a Tier 1 module can 'take over' a link from another Tier 1 instance and expand, 'shrink' and lose control of a link entirely, and also merge from multiple instances into a single entity and 'divide' from one large entity into one or more instances that monitor smaller segments, if required. The following document describes the methods to achieve this and the conditions under which such action can be used.

Expansion - The outcome of these steps is therefore a decision and the implementation of the expansion of the size of the segment monitored by Tier $1_1$, partially or entirely taking over a new network element. The advantage of this proposition is that the re-routing can be done irrespective of whether or not the management is re-organised before or after the load balancing is performed (so that the request is not delayed due to 'administrative' tasks), and the number of options available to a suffering segment is increased compared to what was previously proposed and a suffering link can be replaced by any available next hop that has enough capacity to take on the desired load.

Embodiments of the present invention will now be described, by way of example only, with reference to the accompanying drawings in which:

Figure 1 shows a schematic depiction of a communications network which comprises a plurality of different network segments;

Figure 2 shows; a schematic depiction of a network segment;

Figure 3 shows a schematic depiction of a segmented network which comprises a plurality of network segments;

Figure 4 shows a schematic depiction of a network segment management module;

Figure 5 shows a schematic depiction of a network comprising three segments;

Figure 6 shows a schematic depiction of the network shown in Figure 5 when one of the segments has expanded to acquire a router;

Figure 7 shows a schematic depiction of a network comprising three segments;

Figure 8 shows a schematic depiction of the network shown in Figure 7 when one of the segments has split into two sub-segments;

Figure 9 shows a schematic depiction of a network comprising three segments; and

Figure 10 shows a schematic depiction of the network shown in Figure 9 when two of the segments have merged into a single segment.

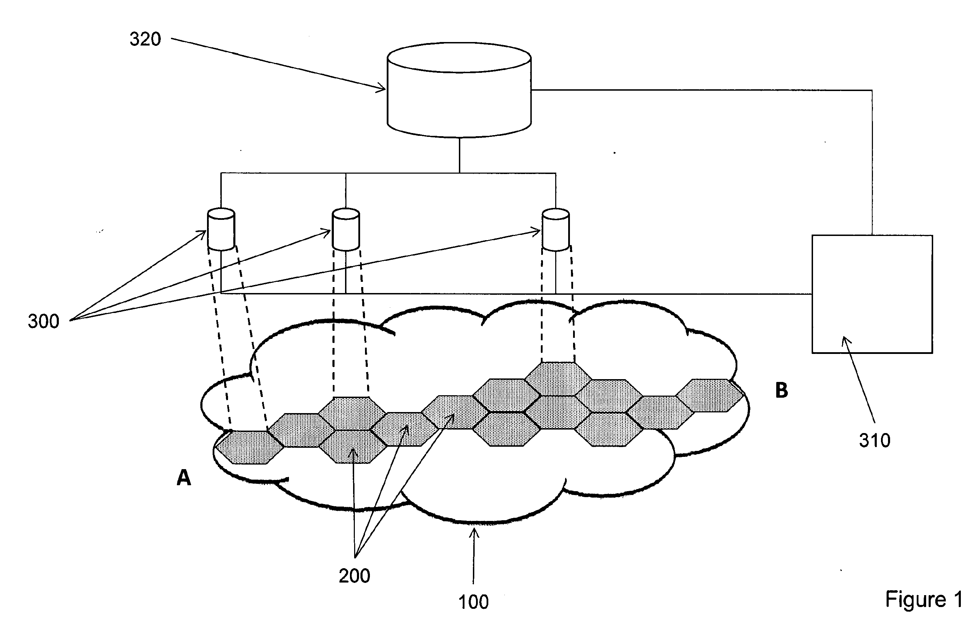

Figure 1 shows a schematic depiction of a communications network 100. A path across the communications network 100, for example between points A and B, can be considered to be comprised of a plurality of different network segments 200. Each of the plurality of network segments 200 is associated with a respective network segment management module 300. For the sake of clarity Figure 1 shows only a subset of the plurality of network segments which lie on or near to an approximate route from point A to point B across the network. It will be understood that the network can be considered to comprise more network segments than are shown in Figure 1. Furthermore, only some of the plurality of network segment management modules 300 are shown in Figure 1.

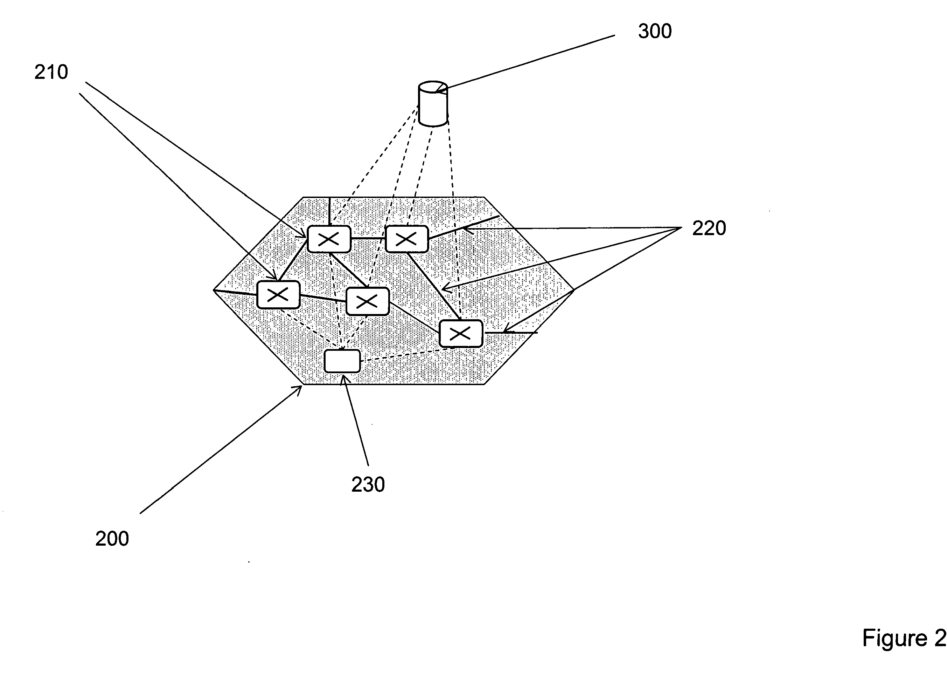

Figure 2 shows a schematic depiction of one of the plurality of network segments 200 which comprises one or more network routers 210 and one or more communications links 220 . The communications links 220 interconnect the network routers 210 within the network segment 200 and also provide connections outside the network segment, for example to network routers within other network segments or to destinations at the edge of the network, for example points A or B. These destinations at the edge of the network may comprise a node that is generating or receiving data or a gateway to further networks. A network segment may also comprise other elements such as switches, bridges, etc.

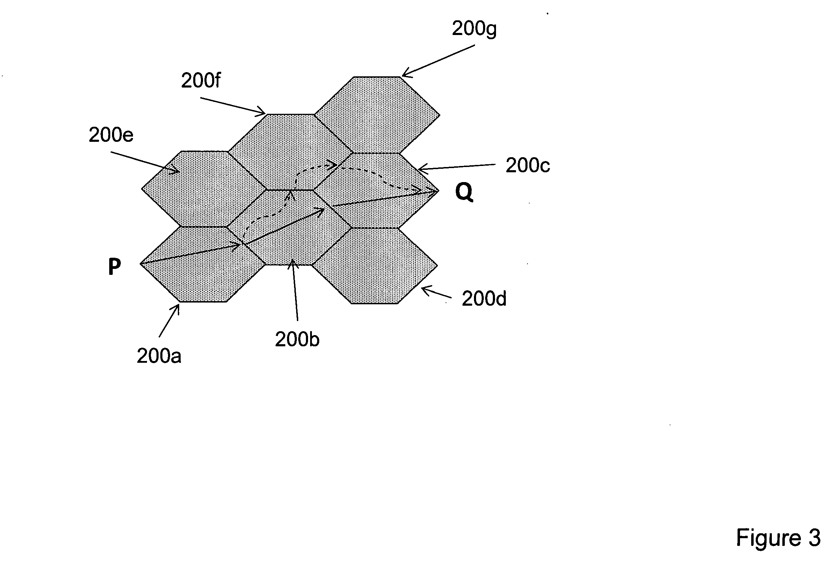

It will be understood that it may be necessary to implement a re-routing which involves the data passing through network segments that were not previously carrying the data. Referring to Figure 3, which shows a schematic depiction of a segmented network which comprises network segments 200a, 200b, ... 200f, each of which has a uniquely associated segment management module (not shown in Figure 3). A route from end-point P to end-point Q is shown with solid arrows as passing from network segment 200a to network segment 200c via network segment 200b. If it is predicted that it is likely that there will be congestion on the communications links within segment 200b that are carrying data from end-points P-Q then it may be possible for this data to be re-routed within segment 200b (as discussed above) and the data delivered to segment 200c before being routed on to end-point Q. However, for example, if such a re-routing were not to be possible then it might be necessary to route the data across network segment 200b to network segment 200f; across network segment 200f to network segment 200c; and then across network segment 200c to end-point Q.

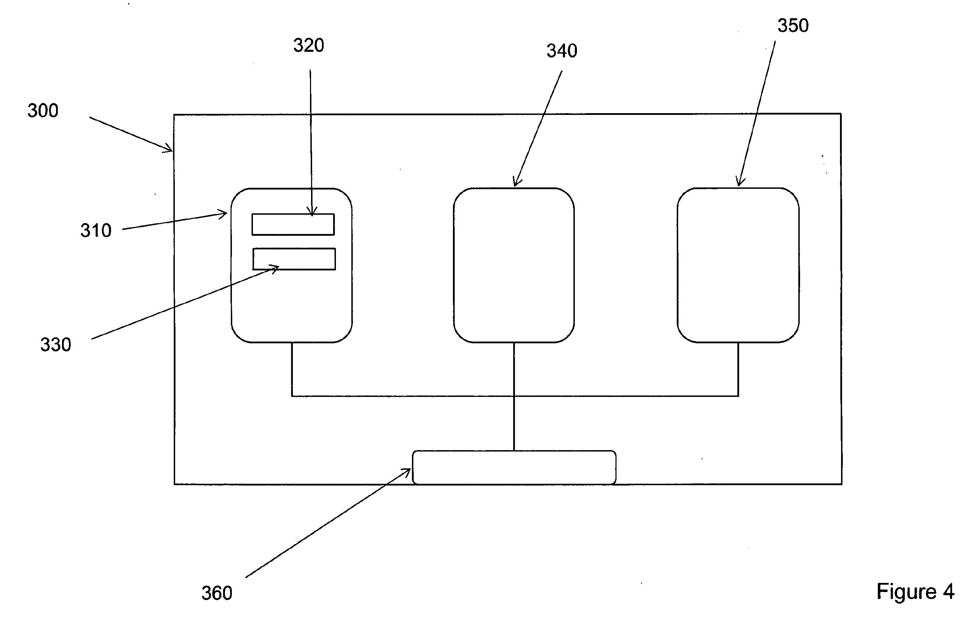

Figure 4 shows a schematic depiction of a network segment management module 300 which comprises non-volatile data storage means 310, such as a hard disk drive or non-volatile memory modules, the non-volatile data storage means storing one or more software applications 320 for performing the above functions, operating system 330, volatile data storage means 340, such as RAM modules, and a central processor unit (CPU) 350. The non-volatile data storage means, volatile data storage means and the CPU are interconnected and are also in communication with network interface 360. In operation, the operating system and one or more of the software applications will be loaded into the volatile data storage means and are executed by the CPU. If data is to be transmitted to, or received from, the network segment then it will be routed via the network interface. It will be understood that the management module is effectively a general purpose computing device which incorporates the one or more software applications 520 that are required to provide the functionality of the present invention.

Referring to Figure 1, consider a flow of traffic from Point A to Point B when the network is only lightly loaded. While standard Internet Protocols provide no guarantee that the end-to-end pathway of two consecutive packets will be the same, a change is only likely to occur if the state of a link or router changes or if a link is being overloaded such that the QoS parameters are exceeding acceptable limits. Therefore, assuming that the network begins in a stable condition then it follows that it is reasonable to assume that at least some consecutive packets will follow the same pathway across the network between Points A and B. As can be seen from Figure 1, the communications network 100 is divided into a number of network segments. A route between endpoints A and B is likely to pass through a set of the shaded segments that are shown in Figure 1. It is possible to define a set of quality of service (QoS) parameters and associated parameter limits that are valid for the end-to-end path across the network from A to B. For example the set of QoS parameters, $P$, may be defined as:

$$P = \{\text{delay, jitter, loss}\} \qquad\qquad [1]$$

but it will be understood that other parameters may be used in addition, or in the alternative. If the values of these QoS parameters exceed predetermined values which represent acceptable QoS boundaries then a SLA (Service Level Agreement) may be breached. In order for the flow of data through each of the network segments to be managed it is necessary to provide segment-specific QoS parameters to the management modules 300 associated with each of the segments in the route. These parameters, $Pa$, represent the limits to the various QoS parameters that apply to the transmission of data for the local segment a for that service session. This can be expressed as "per router or per link, this service can tolerate x seconds of delay, y seconds of loss and z seconds of jitter given that the service flow traverses a range of m - n routers in total from source to destination".

These QoS parameters can be defined centrally, obtained using operator expertise, or derived periodically by the segment management module on a per flow or per service category basis depending on the proportion of links/ routers that the service traverses in that segment compared to the end-to-end distance. The overall QoS thresholds for each segment can be derived from this ratio, based on the size of the segment in comparison to the end-to-end chain.

Regardless of the manner in which this information is obtained, the QoS parameters are either communicated directly to each of the segment management modules or are held in a separate network management database 305. Each of the segment management modules are in communication with the network management database 305 such the network management database can be queried by a segment management module and the associated segment QoS parameters are returned to the management module. As a result, each of the segment management modules will have, for a given service flowing through the network, an array $P_a$ that states the maximum allowable QoS parameters for that particular segment in order that the overall QoS satisfies the SLA.

In order to be able to be able to monitor these parameters in real time it is necessary to translate them into one or more parameters that are easily accessible from the routers 210 that are present in the different network segments. For example, it is possible to access a wide range of local router parameters from the Management Information Base (MIB). These parameters can include, without limitation, ingress/egress buffer availability, router response time, router on/off status, link capacity, rate of ingress and egress traffic flows (the ratios of these flows to buffer occupancy as well as the trend of this over time), and packets discarded on the ingress/egress due to various faults (e.g. buffer overflow, software errors).

Put more formally, it is necessary to express $P_a$ in the generic form

$$P_a = f(\text{d, e, f, g}) \qquad\qquad [2]$$

and to determine the function $f$ and the parameters d, e, f & g which are equivalent to $P_a$. It is known to perform such translations using either linear regression or if necessary a non-linear regression technique such as, for example, a multi-layer perceptron. It will be understood that linear regression is easier to implement and should provide sufficient accuracy. It should also be understood that if suitable router parameters can be found from another source, such as from an aggregator entity (as described below) or another protocol or set of flooded LSAs that have already been implemented to collect such network performance data, then it is possible to use this alternative source of parameters to determine the equivalent expression of $P_a$. Similarly, an alternative method of translating the router parameters in order to determine $P_a$ could be used.

Thus it is possible to monitor a selected subset of parameters that directly reflect the operational performance of each of the routers in the network segments of interest and use this information in order to determine the value of $P_a$ in real time. Once the values of $P_a$ are determined for each network segment then it is possible to use this data to predict when the performance of the network is likely to lead to the SLA being breached, either when considering one or more segments in the network, or an end-to-end network path. The output required from the network as a result of this step is a "near real-time progress report" of the performance of every individual, or class of, service flow in the network.

The actual values of the required router parameters may be obtained by each of the segment management modules periodically polling each of the routers that are comprised within their respective network segments. Alternatively, each of the routers may 'push' the required router data to the segment management modules on a periodic basis or as and when parameter values change. Alternatively, one could implement an aggregator entity 210, which performs the mapping function $f$ and passes the instantaneous QoS matrix it calculates from all its router sources to the segment management module, which then makes predictions based on this QoS data.

Once the performance data has been collected then it will be understood that predictions of potential underperformance can be made in a number of different known ways. One of the simplest methods is to use trend analysis. For example, if the buffer occupancy has increased over the past $n$ periods, then it is likely that delays in the router will increase and therefore exceed the acceptable local threshold after the next $m$ periods. Alternatively, if the number of packets discarded from a UDP voice call flow increases over $n$ periods, then it is likely that the loss of packets will exceed acceptable thresholds after $m$ periods if the same trend continues. In addition to this, it is possible to use association rule mining that learns from historical data. This could lead to rules such as

"if parameters {d, e, f, g} maintain values {$d_a$, $e_a$, $f_a$, $g_a$}, then the QoS parameters $P_a$ are likely to be exceeded within the next $m$ time periods".

Such rules can then be used in real-time by the segment management modules. Association rule mining is a known technique and there are several known learning methods (for example, decision and regression trees or neural networks, see T Mitchell, "Machine Learning", McGraw-Hill Science/Engineering/Math, 1st edition, 1997) that could be used to make these predictions and to map these predictions to specific parameter values in the form {$d_a$, $e_a$, $f_a$, $g_a$}. The segment management modules compares the real-time parameter inputs it receives from its routers to the criteria required by these predictions. This can be done by comparing the rules stored in a database to the incoming parameters and automatically triggering a subsequent action when a rule is fulfilled. It will be understood that this can be done according to class of service or on a per flow basis. This distinction might be necessitated by various services from different providers requiring different SLAs and QoS parameters, therefore leading to different rules for each class of service and/or flow.

If such a rule is triggered then it will be understood that the consequent action to be performed could take one or more of a large range of actions in order to prevent network congestion building up at one or more particular routers on along one or more communications links within a given network segment. It is thought that one appropriate response is to spread data across the network segment, based upon historical knowledge of how much data that other currently available communications links in that segment can tolerate whilst still being able to sustain the locally assigned SLA. It will be understood that all of the traffic being transmitted over that link may be re-distributed, or alternatively just a fraction of the data can be re-distributed. A further advantage of such a re-assignment of some or all of the traffic from an underperforming link is that the reduction of the load on that link should provide an opportunity for the performance of that link to recover and to minimise the effect of its underperformance until a recovery has been effected.

For example, if there are two possible routes to a destination and the primary route is reaching capacity, such that it is likely to lead to congestion, then sending a certain percentage of traffic via the secondary route, even if it is not be able to take 100% of the primary route's traffic, is likely to be better than keeping the primary route fully occupied.

This re-routing of some or all of the data can be achieved either using link information from IP routing tables and/or using other rules learnt from historical performance of the communications links in the network segment. In one such method, the segment management module will poll the router that is upstream of the most underperforming routers in order to learn about the next best hop to replace the suffering link. It is recommended to poll the router that precedes the suffering link as it is likely that this has the most up-to-date information about its next best hops. Should the polling cause too much overload on the router itself, one could poll any router nearby (not necessarily only upstream) if a link-state protocol such as OSPF is being implemented at the IP layer. In the case of distance vector protocols such as BGP or RIP, it is necessary to poll the router preceding the suffering link because no other router will actually have the required next best hop information.

The next best hop may be within the same network segment or it may be in a different network segment. If it is in the same network segment, then a rule repository about the prior performance of the next hop link can be consulted to decide how much of the data can be offloaded onto the new link, given the current occupancy and expected performance of the proposed next hop. Alternatively, the data distribution can be done randomly across all the links that could be used to carry that particular service. In a further alternative, the traffic may be distributed evenly across some or all of the available links, or the traffic may be distributed in a manner which is proportional to the available capacity on these links.

If such a rule regarding the prior performance of new next hop does not exist in the rules repository, then the decision as to whether to re-route traffic over this hop will be made based only on the current loading of the next hop and the services that are being transported over it.

Once the decision to re-route traffic has been made then it will be logged by the network segment management module, so that the effect of the re-routing can be stored and this historical performance data may then be used when making subsequent decisions regarding the re-routing of traffic.

In the case where the next hop is located within the same network segment as the suffering link, once it has been decided how much data to re-route, and the next hop(s) over which it is to be re-routed, then it is necessary to implement a mechanism for that distributes the re-routed traffic onto the new next hop(s). For some cases, it may be appropriate to decided to offload all the data from an overloaded link if it is predicted that the link will fail entirely within a predicted timeframe (see, for example, the Applicant's co-pending application EP10250540). This may be achieved, for example by increasing the link cost, thus releasing the link entirely from the network.

If the management of the network 100 is based solely on decisions that are made within the individual segments of the networks, then there is a possibility that inefficient or inappropriate routing decisions may be taken, as each of the segment management modules does not have any information regarding the end-to-end QoS for the service flow over a large network is large. This can lead to the following situations occurring:

- a segment that is under stress could be throttled for to meet local QoS targets when the end-to-end QoS measures are well below their respective thresholds;

- a handover process might be triggered when not necessary, resulting in extensive overhead in setting up the data re-routing as well as reporting the change to other network management systems;

- as the size of the monitored network increases, the iterative handover process requires a prediction period that is longer than might be necessary because the first alternative route might not be suitable, and several alternatives might need to be investigated before an acceptable alternative is found

- a network segment with acceptable performance may be forced to deteriorate the service provided in order to avoid a detrimental effect elsewhere within the network.

In the network management system discussed above, if it is not possible for a segment management module to fix a local fault, possibly within a defined time period, then this can lead to an alarm being issued. The present invention provides a network management system which should significantly decrease the number of such alarms that are issued.

Figure 1 further shows a supervisory network management module 320 which is in communication with each of the plurality of network segment management modules 300. A network management database 310 is in communication with both the supervisory network management module and the plurality of network segment management modules. The supervisory network management module can function in two different methods. Firstly, if the segment management modules make local decisions to optimise each individual part of the network, but only once service degradation has occurred, then the supervisory module can add an overlay to that those local network management modules. Secondly, the supervisory module can add a overlay to the proactive segment management modules discussed above with reference to Figure 1. In the first case, the processing and responses of the supervisory module have to be quick enough that it can react to network speeds so that data is not lost while the processing is taking place. For both methods of operation, the purpose of the supervisory module is to reduce the number of handovers made between the local entities by preventing unnecessary handovers from being triggered.

In operation, the supervisor module has access to real time performance data from each of the network elements in each of the network segments which comprise the communications network 100, and these are expressed as real-time QoS parameters P. The supervisory module will receive periodic updates for these QoS parameters P for each locally managed network segment, for a given class of service, thereby enabling the supervisory module to make predictions about the future health of a given network segment. These predictions can be made using a number of different methods, which may include knowledge held by a network operator regarding prior experience about a network segment. Another automated technique of making this prediction is to use an association rule miner or a time series analysis for each QoS parameter, as described above with regard to the segment management modules.

If one of the network segments determines that a communications link within that segment will soon become overloaded, then this change will be communicated to the supervisory module. If that network segment is able to re-route the data solely within the network segment then there is no need to invoke the functionality of the supervisory module. However, if it is not possible to re-route the data within that segment, then the network segment management module will send a message to the supervisory module regarding the data which it is not able to re-route..

The supervisory module has an overview of the entire end-to-end route across the network, the QoS thresholds for the end-to-end route and the QoS thresholds assigned for each of the different network segments that the end-to-end route passes through. Thus, typically, a segment management module will send a re-routing request to the supervisory module because the segment is unable to continue to transmit the data without breaching one or more of the QoS thresholds associated with that segment. If the supervisory module is able to determine that a number of the other segments in the end-to-end path are operating sufficiently below their respective thresholds then it may permit the network segment that sent the re-routing request to carry on transmitting data via the original route.

As is discussed above, the QoS threshold parameters, $P_a$, for each of the segment management modules can be stored within the network management database 310 and these parameters can be accessed by the supervisory module. If there is a small number of overloaded segments within a network route then it may be possible to vary these threshold parameters, $P_a$, in order to decrease the number of handovers and thus provide more effective network usage. When the supervisory module receives a request from a segment management module to initiate a handover, it will check the real-time performance of each of the network segments in the end-to-end network route to determine which segments, if any, are performing better than expected and are predicted to perform better than expected. If such segments are found then it is possible to adjust the QoS parameters for the overloaded segment, for example by a margin of δ, so that the QoS parameters are defined by:

$$P_a = \{x_a + \delta_a, \ y_a + \delta_b, \ z_a + \delta_c\} \qquad \text{[3]}$$

The QoS parameters of the well-performing segment will then be decreased correspondingly, such that they are defined by:

$$P_a = \{x_a - \delta_a, \ y_a - \delta_b, \ z_a - \delta_c\} \qquad \text{[4]}$$

where $\delta_a$, $\delta_b$ and $\delta_c$ are the respective margins for each QoS parameter. It will be understood that if the adjustment may involve one segment having its parameters increased by a particular margin and another segment having a corresponding decrease in its QoS parameters. In some cases it may be necessary to decrease the QoS parameters of a number of network segments in order to be able to increase the QoS parameters of one network segment (or a small number of segments). In any case, the total of the QoS parameters across the end-to-end network route must remain constant, in order that pre-agreed service level agreements can be met. If not all of the QoS parameters for a given segment (or segments) are predicted to exceed their thresholds then it is not necessary to vary the margin for those parameters, for example if a segment is expected to underperform with respect to the delay threshold but is predicted to have an acceptable jitter performance then only the threshold for delay will be increased whilst the jitter threshold will remain unchanged. The variations in margin may be determined on the basis of a predetermined constant value, a percentage of the initial threshold value or may be determined by an algorithm that weights the margin value in accordance with the expected performance of a network segment or other factors. Once the QoS parameter values have been determined for the overloaded segment(s) then they will be updated in the network management database and will be transmitted to the relevant network segment management modules. These segment management modules will then apply the new QoS parameter values and thus if it is no longer necessary to re-route the data then the re-routing will not occur.

In the event that none of the network segments is performing better than was predicted then it will not be possible for the QoS threshold of an overloaded segment to be increased in such a case. In such an event, the supervisory module may return to a segment management module which has reported that it needs to re-route data to another segment a list of adjacent network segments which are potential candidates to receive re-routed data. The supervisory module may remove unsuitable network segments, for example because they lack the security or encryption required by the data stream that is to be re-routed. By providing a restricted list of segments for re-routing then the effort required of the segment management module to re-route the data can be reduced.

Note that if a segment that is expected to perform better actually does not live up to this expectation, this will be seen when it requests for permission to initiate handover at a later stage because it has not been able to meet its higher standards. This might result in an oscillation effect but this can be learnt over time and certain segments can be marked as being unable to perform as well as expected (i.e. rule_miner_2) and therefore lesser data can be pushed through to them when the same situation arises again (this is similar to the procedure behind route flap damping).

It should be understood that the supervisory module is only able to route traffic from overloaded segments to segments which are under-loaded and that are performing better than had been predicted. If there are no under-loaded segments then re-routing traffic will only re-route overload conditions between different network segments. If the supervisory module permits data to be rerouted on a frequent basis then this may cause an alarm to be generated as it may indicate that the network is nearing its capacity and that the autonomous fixes provided by the supervisory module are no longer sufficient to address the problem.

If a network has a large number of segments then it may not be possible for all of the segment management modules to be overseen by a single supervisory management module. In such a communications network, a number of supervisory management modules 320 are each responsible for communications with a subset of the segment management modules 300. The network operates as described above. If a request for a re-routing of traffic from one network segment to another segment is made, then this request will be made to the appropriate supervisory management module. That supervisory management module will attempt to adjust the QoS parameters for the overloaded segment based on the other segments that it is supervising which may be performing better than had been previously predicted.

From the preceding discussion, it will be noted that a segment management module is not permitted to initiate handovers with another network segment, should it be unable to find a replacement for an overloaded link within its own segment. Such a handover must be authorised by a supervisory management module. Furthermore, a supervisory management module is not permitted to facilitate a handover to a node that is controlled by a second supervisory management module. Therefore, the only re-routing option available is to bypass one or more routers within its end-to-end chain of routers.

A consequence of these conditions is that an established session is not highly malleable. Consider an adjacent router, which is within a segment that is monitored by a different supervisory node; such a node cannot be used to relieve an overloaded communications link.

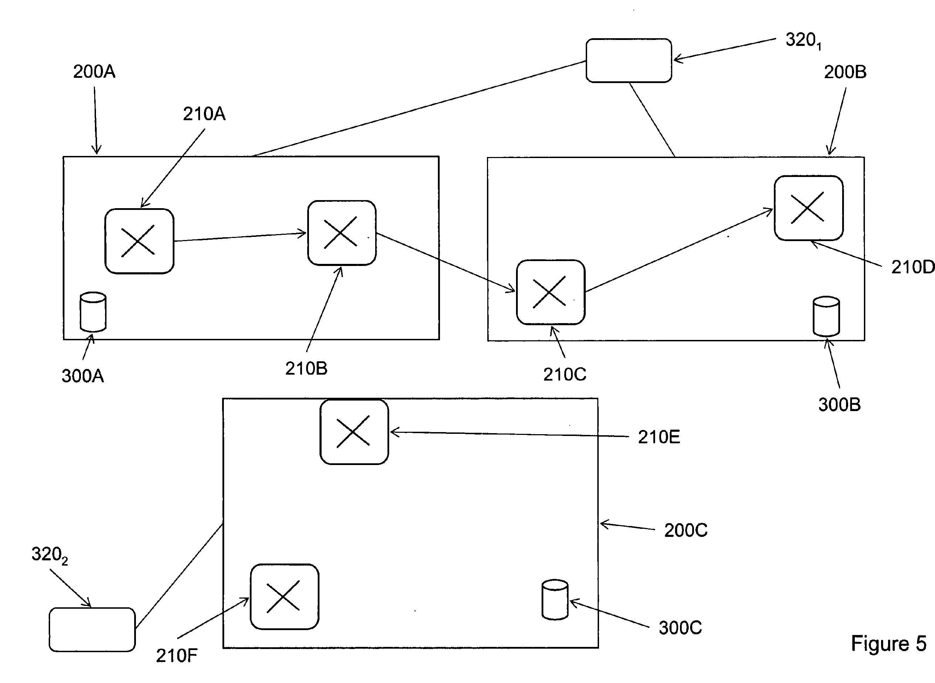

Figure 5 shows a schematic depiction of a network comprising three segments 200A, 200B & 200C. Segments 200A & 200B are managed by supervisory module $320_1$ and segment 200C is managed by supervisory module $320_2$. Segment 200A comprises routers 210A & 210B and segment management node 300A, segment 200B comprises routers 210C & 210D and segment management node 300B and segment 200C comprises routers 210E & 210F and segment management node 300C. Assume that a session is carried from routers 210A→210B→210C→210D. If QoS degradation is predicted to occur on the communications link that connects router 210A to 210B the it will be necessary to find an alternative routing from router 210A. Furthermore, assume that there is a link that connects router 210A to router 210E in segment 200C and also a link connecting router 210E to router 210C in segment 200B. Following the protocol that a monitoring segment is responsible for QoS maintenance within its own segment but also for the relevant data flowing through all its egress links as well, then segment management module 300A would supervise the link from router 210A to 210E and segment management module 300C would supervise the link from router 210E to 210C.

However, if a handover were to be made such that route 210A→210E→210C→210D then the following issues that need to be considered. The apportioning of local QoS parameters after the handover: even if all of the load is transferred to router 210E, which will simplify the QoS apportionment, how is this value to be read/written to in the QoS tables and how will QoS table values be apportioned to the new link? Every change in segment 200A that mandates an update of QoS tables must be signalled to segment management node 300C, which has taken over a section of the flow, which will add to management overhead. Moreover, should more than one router be bypassed from the original route, a protocol that determines the new QoS tables for all links, must be used across segments 200A and 200C, having been given the privileges to access and amend such information. This is time-consuming and delays post-handover monitoring, and potentially the handover itself. Also, in this manner of handing over a length of the end-to-end chain to another segment, supervisory module $320_1$ loses control over that link and therefore has less control if another link in segment 200A also begins to suffer. This can lead to a cycle where eventually segment 200A has handed over all its load to other segments as supervisory module $320_1$ did not have enough malleability in balancing out QoS performance across the end-to-end network flow. This is a disadvantage of having strict boundaries for both the segment and supervisory management modules.

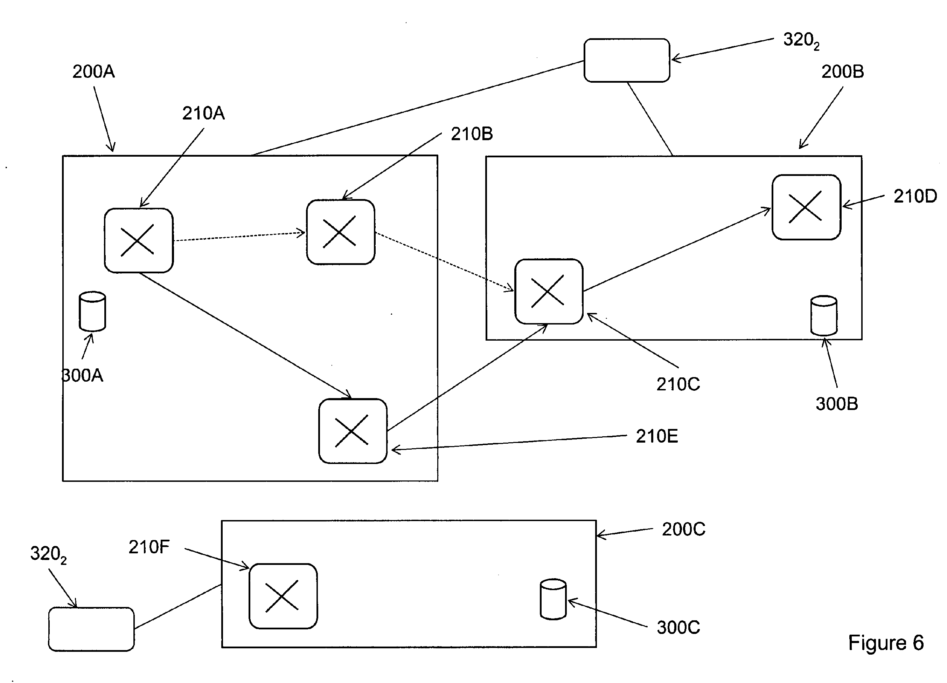

Figure 6 shows a schematic depiction of a communications network which can be reconfigured to provide more flexible routing, according to an embodiment of the present invention. Considering the situation described above with respect to Figure 5, assume that the link L1 between routers 210A and 210B is predicted to breach QoS thresholds. Once link L1, connecting routers 210A and 210B, has been discovered by polling the routers then the segment module 300A will check if router 210E is already being controlled by another segment module.

For example, if router 210E is a new element introduced into the network, then segment module 300A will takes over control of the router and the monitoring of all its egress links. This expansion of the segment will be registered with the supervisory module $320_1$ and the network management database. Taking control of the router and absorbing it into segment 200A also includes:

a) inheriting any available performance predictions for all egress links from the element being taken over,
b) making future predictions of performance degradation using the function $f(d,e,f,g)$ described above,
c) gaining read and write privileges to the QoS tables, and
d) using router 210E as an internal hop if it is highlighted as a possible next hop by another router in segment 200A.

If router 210E is controlled by segment module 300C then the first step is determine what use segment module 300C makes of router 210E's resources. If none of the links on router 210E are currently in use, segment module 300A can now take over router 210E as described above. Note that this handover of router 210E will also need to be logged with supervisory module $320_2$. Figure 6 shows the communications previously shown in Figure 5 with segment 200A having expanded to include router 210E and segment 200C having contracted appropriately. Now that router 210E is a part of segment 200A it is possible to reroute traffic along the route 210A→210E→210C→210D. The previously used routes from routers 210A to 210B and 210B to 210C are shown with dotted lines.

Further issues arise when segment module 300C is using some of the available links from router 210E for other links. One solution is to resolve the conflict with a trade off to decide which segment module will maintain monitoring control over Router210E and this can be decided from performance statistics and predicted load trends that are already available to segment module 300C from its periodic monitoring, as described above. There are known algorithms (for example, time series prediction and regression trees or neural networks, see T Mitchell, "Machine Learning", McGraw-Hill Science/Engineering/Math, 1st edition, 1997) which can predict such trends and determine a handover threshold, $T_{HO}$, for the decision of whether or not to handover an entity to segment module 300A. For example, assume that the network operator has specified a simple rule that a segment module can expand to take over a network element if more than 50% of the sessions flowing through that router belong to a session that it monitors. It will be understood that more complex rules can be specified that also take into account predicted usage of links by other services, resource reservation by other network entities and other load management policies, etc. Assuming that the load of L1 that is to be rerouted to L2 and back to Segment 2 via L3 is likely to occupy 60% of the capacity of L3 and that router 210E has no other active sessions through its other links (all this information will be available to segment module 300C). This therefore satisfies the condition set by the operator and the takeover of router 210E by segment module 300A can be completed.

However, there may be circumstances where this takeover is not appropriate. One such instance is where segment 200A only requires a small proportion of the capacity of L3 and thus $T_{HO}$ is not met. Another instance is where segment module 300A is not permitted to monitor other sessions passing through router 210 due to data sensitivity, or for some other reason. Where a takeover is not appropriate then three solutions are possible:

a) avoid using router 210E for the next hop entirely;
b) partition the available links from router 210E according to class of service and allow segment module 300A to monitor as much load as is taken on by L2 and L3 from L1, such that performance maintenance of L3 becomes a shared responsibility of segment module 300A and segment module 300C with a maximum bound on how much of L3 belongs to segment module 300A and segment module 300c respectively; and
(c) route load on L1 through L2 and L3 while leaving L3 within segment 200C and being managed by segment module 300C.

Solution (a) is the easier option if there are several other next hops available in the original segment that could replace the over-loaded link and if the re-routing has not yet commenced. If, however, the above-described methods are implemented alongside a system that performs a handover first to respond to a QoS deterioration demand before handling the control layer aspects), it might not be possible to abort the diversion of data through router 210E and back to router 210C and thus solution (b) might be the better option.

It should be noted that in solution (b), it is proposed to dissect the capacity of a link into several partitions, the ratios of which correspond to the class of service and relative link occupancy. Such boundaries also alleviate concerns of greedy services taking an increasing capacity from the network while depriving other less demanding services of their due share. For example, in a network with 5 classes of service, the highest class of service (i.e. the most inelastic traffic) is apportioned a larger partition. Such partitioning is already familiar in the form of Differentiated Services and is implemented by queue management algorithms such as Weighted Fair Queuing. If segment modules 300A and 300C monitor transmission of data that together is allocated 10% of link L3, segment modules 300A and 300C will share this allocation and segment module 300A will monitor however much load it places on the allowed 10% of L3. This 10% allocation may or may not be fixed or pre-determined and can be adjusted to accommodate more of the same class of service if there is no predicted demand on the network from other classes of service. Such queue management algorithms are known but the predictive processes described above may be added to these algorithms.

Solution (c) proposes to remove the restrictions described above. Note that this solution does not modify the boundaries of any of the network segments and could be used if the network is not under stress. This involves a negotiation protocol between supervisory module $320_1$ and supervisory module $320_2$ such that every time a performance degradation across the supervisory module $320_1$ chain occurs and a request to handover is raised by the relevant segment module, supervisory module $320_1$ must query supervisory module $320_2$ to find out if any optimisation can be performed within the latter's segments to prevent unnecessary handovers. Note that this must also be completed within the overall prediction period before QoS degradation. This can still be possible as long as there is enough communication within acceptable timescales between and amongst segment management modules and supervisory modules to keep QoS tables updated and also if the original pathway for the flow that loses a link from its management is not under stress. Potentially, segment module 300A could renegotiate control of router 210E at a later time if the need arises.

If router 210E is transferred from segment 200C to 200A, then segment management module 300C must remove its monitoring capabilities from router 210E. Such a feature could also be initiated externally by an operator to release a network element from management, possibly to decommission it from the network or arbitrarily assign it to another network segment.

The principal steps involved in this procedure comprise:

a) communicating to the relevant supervisory module (supervisory module $320_2$ in this example), that router 210E is no longer part of segment 200C,

(b) handing over all performance predictions, performance models unique to the router, QoS tables and data collected (for example. providing read/write data access, providing the pointers for where in the data structures this information can be found, etc. to segment management module 300A) for all egress links from router 210E to segment 200A.

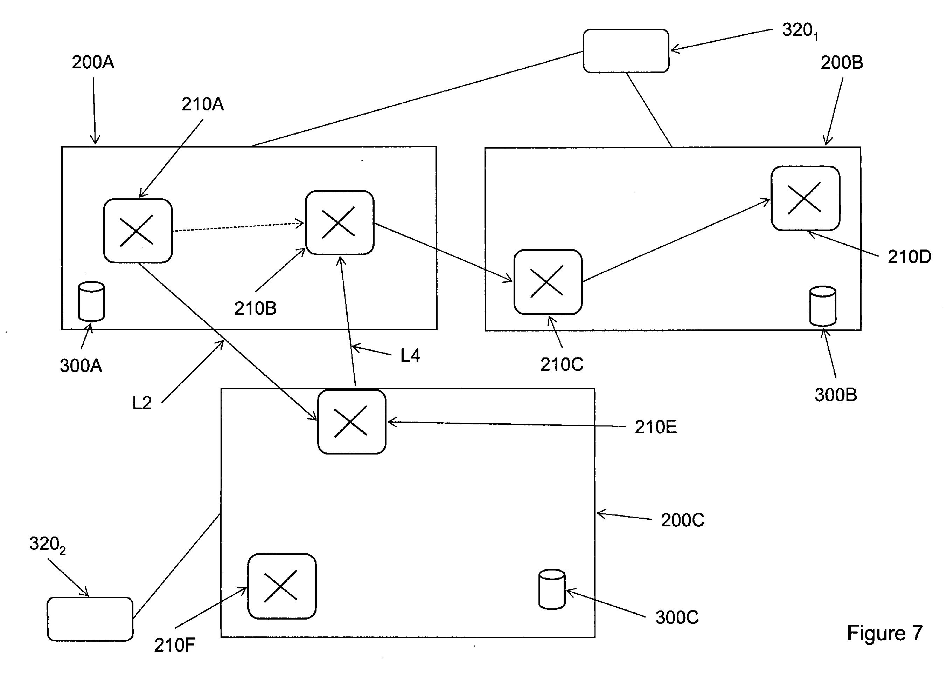

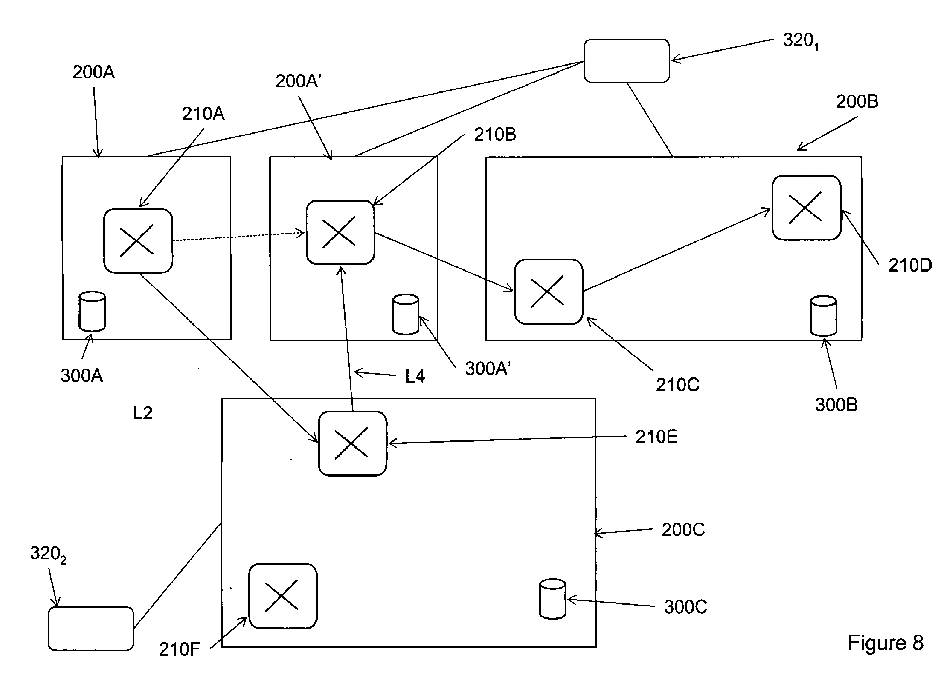

Figure 7 shows a schematic depiction of the network described above with reference to Figure 5, in which overloading means that the route 210A→210B→210C→210D can no longer be supported. A new path 210A→210E→210B→210C→210D is initiated, which now includes link L2 from router 210A to router 210E and link L4 from router 210E to 210B. It will be remembered that segment management nodes will monitor internal and egress routes from their respective segment thus L2 (and superseded L1) will be monitored by segment module 300A and L4 will be monitored by segment module 300C. Unless a router is new to the network, it is likely that there will be performance metrics available for all links from the segment routers in either segment module 300A or 300C which can be exchanged if required. In this situation, it could be cumbersome to maintain an overall segment QoS table for segment 200A as specified above while the data, in fact, routes out and back into this segment. In this case, it could be more beneficial to divide segment 200A into two independently operating segments, segments 200A and 200A' such that L2 is the egress link from segment 200A, and L4 is an ingress link into segment 200A' from segment 200C. Figure 8 shows a schematic depiction of the network showing reconfigured segment 200A and new segment 200A', which comprises router 210B and newly instantiated segment management module 300A'. In the present case, the splitting of a segment occurs at the router preceding the suffering link (that is, link L2). In general, a parent segment management node divides such that the router preceding the diversion still remains within the first daughter segment, that is segment 200A, and the first router in the ingress back into the original segment belongs to the second daughter segment that is segment 200A'.

Furthermore, it may become necessary to split a segment that has become too larger into a plurality of smaller segments. Such a situation may occur when multiple takeovers may have resulted in a segment exceeding a maximum number of allowed entities in a single segment. This maximum limit could be hard coded into each segment management module, or could be determined dynamically based on several factors, for example increasing trends in end-to-end signalling delays within the segment, an unacceptable increase in computational time required to make performance predictions of all routers in the segment, etc. It should be noted that an inherent trade off is to be made here: while a higher number of routers per segment increases the load on the learning algorithm and decision making engines, this in fact could allow better identification of trends and associations between simultaneous performance degradation. The maximum and minimum sizes of the segment, therefore, are to be carefully chosen. Once such a limit has been determined, every segment management module will recognise, potentially from the number of QoS metrics it receives from the network at a given time, or from the aggregator function that could provide this statistic, that the maximum threshold has been hit, therefore mandating a division of the segment into two, or more, daughter segments.

In the example given above with reference to Figures 7 & 8, the separation was determined based on the identification of an overloaded communications link. Since this does not apply here, a new mechanism for determining the splitting of the segment is required. Such a division can be made using a number of different criteria. A list of potential examples is given below, and it will be understood that these criteria could be applied independently or in combination:

(a) equal division of the parent segment into one or more smaller segments;
(b) division such that the number of resulting monitored elements in a single segment is proportional to the computational capabilities of the respective segment management module;
(c) classification according to types of services carried and the geographical distribution of these flows in the parent segment; and
(d) maximum delays in flooding LSAs (Link State Advertisement) within the segment.

Regardless of the criteria chosen the next step is to decide how to split the routers in a parent segment into a number of daughter segments and to then implement this decision. This could consist of the following steps, not necessarily being performed in this order:

(a) the segment management module spawns a new thread (or threads, as appropriate) as a duplicate instance,
(b) the new segment management module(s) register themselves with the relevant supervisory module by signalling entries into the data structures of the supervisory module regarding the existence of the new segment management module(s);
(c) the supervisory module names the new threads to create independent segment management module entities and creates relevant network addresses and identifiers for them;
(d) the supervisory module updates QoS tables with recalculated QoS thresholds, taking into account any diversion of data through other segments (for instance, a larger segment is likely to benefit from a larger QoS threshold);
(e) the segment management modules notify the routers (and aggregators if used) affected by the change of the new network addresses and identifies to which performance metrics packets can now be sent (information about which routers to communicate to will be available from the data structures of the parent segment).

The distinction between the logical functionality of a segment management module (and the supervisory module) entity and a physical element that performs the relevant functions should be noted. This means that a single hardware element could be used to implement multiple segment management modules and/or supervisory modules. Therefore, the division of a single segment into multiple smaller segments need not require that the number of physical monitoring elements in the network be increased. It should also be noted that each daughter segment will have its own segment management module in relation to the relevant supervisory module (or any alternative higher, monitoring element). This means that it can expand, merge, collapse, divide, etc. further as required by future demands.

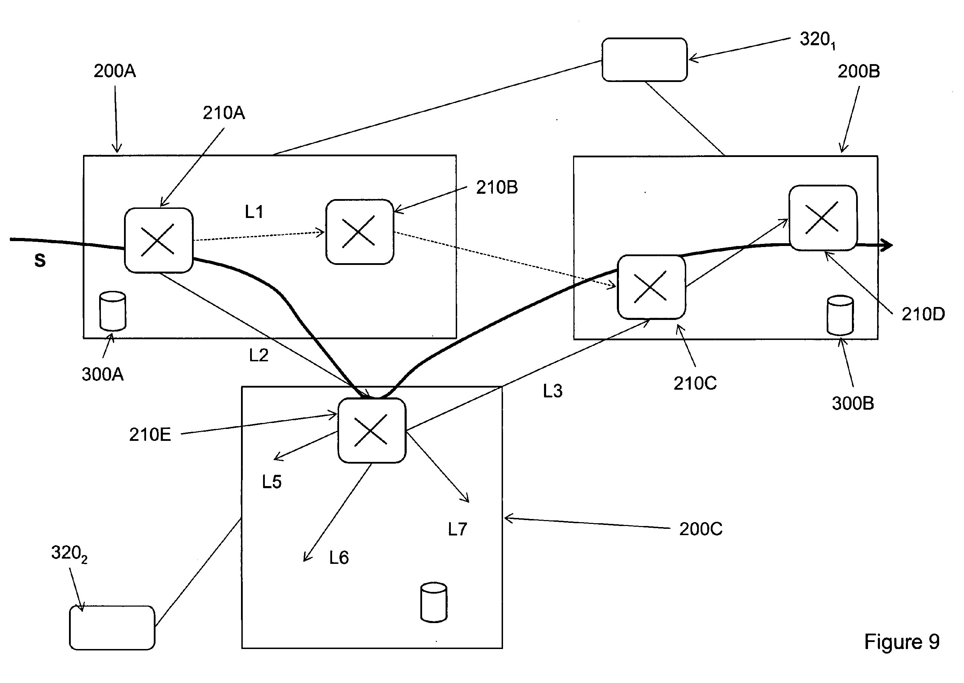

Similarly, it may be necessary to define a minimum requirement for the number of routers that are monitored by a single segment management module. Figure 9 shows a schematic depiction of a segmented communications network in which segment 200C comprises a single router 210E. Due to congestion in segment 200A, there is a network session, S, that is routed from router 210A→210E→210C→210D. The links between routers 210A & 210B and between 210B & 210C are shown in dotted lines to show that they are no longer in use. Link L2 connects router 210A, in segment 200A, to router 210E, in segment 200C. Link L3 connects router 210E to router 210C, in segment 200B. Router 210E has three further egress links, L5, L6 & L7. As segment 200C now only has a single router then it is necessary for that segment to merge with another segment.

The merging process begins with a determination of which of the ingress/egress links carry the same type of traffic as that being monitored by segment management module 300C, so that similar segments can be merged together. Assuming that segment management module 300C monitors only one incoming flow (L2 from segment 200A) and one outgoing flow (L3 to segment 200B), then it has the option of either merging with segment 200A or segment 200B to create a larger segment (it should be noted that it is not impossible for all three segments to merge into a single segment).

Assume that segment module 300C communicates with segment module 300A first. Note that if there are other similar sessions such as Session S (, this increases the number of options available to segment module 300C. In the present example segment module 300C wants to merge with another segment management module. The only options available here are 300A and 300B because session S flows from 200A and back into 200B. If there were other sessions similar to S, then this will increase the number of merging options to segment module 300C as it can now select the management modules covering these sessions as well as session S.

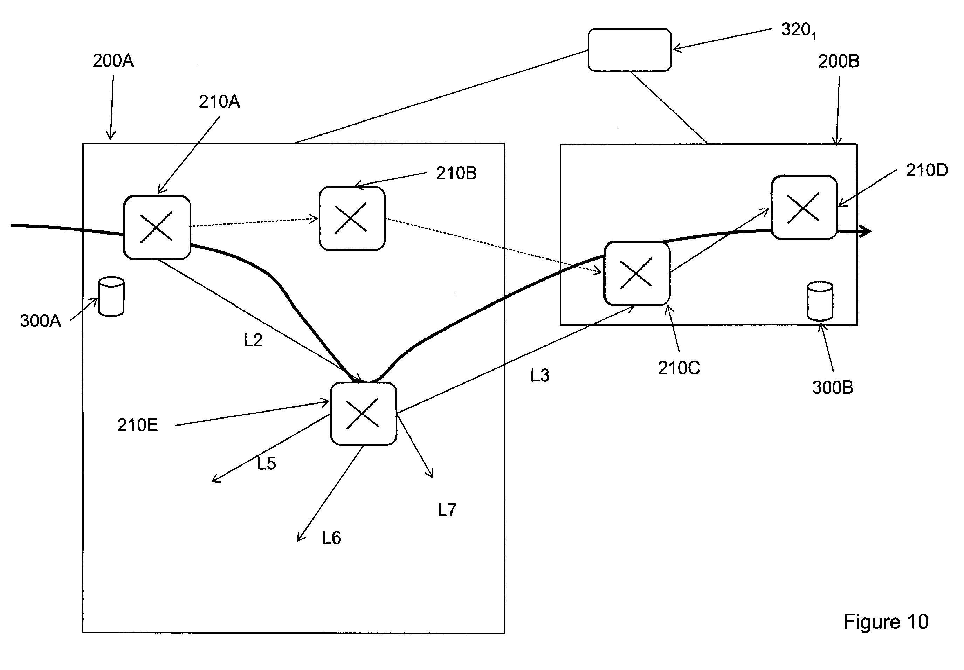

Segment management module 300C will poll segment management module 300A to determine which other sessions, if any, module 300A is monitoring and how much of the partition available for that class of service is being used by these sessions. Assume that a 10% partition has been allocated for this class of service and that Session S occupies 60% of this allowance on L2. Segment 200C can then merge with segment 200A, such that the combined segment (which will subsequently be referred to as segment 200A) continues to monitor 6% of the entire link L2 (that is, 60% of the 10% of the link allocated to that class of service). In addition to this, the segment management module 300A also monitors all of the egress links from router 210 as well. Figure 10 shows a schematic depiction of the communications network, showing the merged segment 200A, which now comprises routers 210A, 210B and 210E. The segment management module 300C is no longer required and thus the thread(s) representing this module can be terminated.

The following features should be noted:

(a) A merger of network segments that report to different supervisory modules is possible. As in the present case, one of the segment management modules could migrate away from its supervisory module and join that of another.
(b) If the segments are of different sizes, then it is preferred that the segment management module of the larger segment absorbs the smaller segment management module and the merged segment will retain the name of the larger segment.
(c) If both segments are substantially the same size and belong to the same supervisory module then the renaming can be done arbitrarily or according to a operator-specified technique, implemented by the supervisory module.
(d) If both segments are substantially the same size and belong to different supervisory modules, they could be merged in accordance with the current load on the routers monitored by the two entities, for example the segment having the higher router loading will retain its name and supervisory module in order to minimise the number of changes in the network reporting structure. Alternatively, any other operator-specific protocol can be used, which may take into account the proportion and nature of other classes of service on the two segments participating in the merger.
(e) Once a merger has been completed, the QoS tables for the two segments must be updated (to take into account the larger size of the segment), the relevant supervisory node(s) and lower-level network elements must be informed of the change so that both know from where to expect network performance reports and requests for handover, and where to address network performance data collected from the MIBs, respectively.

It will be noted that there are some similarities between the merger of two segments and the expansion described above. However, the difference between the two procedures lies in the originator of the action. In an expansion, the takeover is initiated by a segment with a suffering link looking for a method to balance its load, whereas in a merger, a smaller segment seeks out another segment in order to merge with it. It is also possible for such mergers to continue until the merged entity reaches the optimum acceptable segment size for best learning performance traded off with complexity of segment management and data analysis.

One advantage of growing segment size by such mergers is the reduction in cross-segment and segment management module to supervisory module signalling, which could potentially cause significant loads on the network itself. Moreover, given that data flows change routes to destinations whenever a change in the network occurs, the initial management topology may not hold with time. With such a method, the operator can compact the management of the network into fewer entities for the same data flow if the management entities have enough capacity to actually take on and maintain a larger segment and the data flow is compatible to this re-organisation. This is therefore an optimisation technique of the management overheads required for a given data flow.

By providing flexibility with respect to the network segments, as described above, then supervisory module(s) can remain fixed to their respective network segments and do not require any similar degree of flexibility.

The preceding discussion has focussed on the techniques used to re-configure the network once the load balancing algorithms have decided upon the spreading of data, that is how much data is to be spread across which links. However, this spreading decision is not trivial as there can be any number of hops to reach the destination from the first possible next hop and the various management modules must endeavour to find the best one within the prediction period.

Referring to Figure 5, assume that there is a suffering link L1 which connects router 210A to router 210B within segment 200A. Based on the methods discussed above with reference to Figures 1 to 3, the segment management module 300A would poll router 210A for possible next hops to replace L1 and would find that there are two available hops - one that routes within segment 200A to reach router 210B, and another that routes, via L2, to router 210E. However, router 210E, as described above, belongs to segment 200C and is managed by segment management module 300C and supervisory module $320_2$. The methods discussed above with reference to Figures 1 to 3 would prohibit a route that would transfer the route out of the supervision of supervisory module $320_1$.

In order to facilitate the diversion of traffic from overloaded link L1, the first step is to determine whether link L2 can, in fact, take the desired load based on the historical tables that give past performance of success for given loads. This QoS negotiation can be done either directly by segment management module 300A with segment management module 300C, or by supervisory module $320_1$ with supervisory module $320_2$. Assume, then, that historical tables indicate that 100% of the session that is about to suffer from QoS degradation can be transferred to L2. Segment management module 300A must now determine if there is a route back into segment 200B. This route back could consist of one or more hops from router 210E until there is a hop back into any router within segment 200B. Finding the best route is likely to be a complex task.

If a single hop back into a downstream router within supervisory module $320_1$ is available from router 210E with sufficient capacity (performance predictions for the link back into such a router will be available from segment management module 300C as it is an egress link from router 210), this route will be picked in preference to other possibilities. If this is not available, segment management module 300C must either be able to determine a route back with one more (or a pre-determined number of) hops and negotiate QoS capabilities as well. The challenge is to be able to accomplish this task within the prediction period, i.e. before the performance degradation occurs. Therefore, a timeout period could be specified, or a maximum number of hops that could be attempted outside of supervisory module $320_1$ and if this is not achieved, either this alternative route is dropped or a smaller load is transferred according to information from the historical tables. If this QoS negotiation has been done by the supervisory modules, the aggregated list that collectively remove all desired load from L1 onto alternative pathways is passed down to the segment management entities. Alternatively, if the segment management entities perform the QoS negotiation and make decisions about load distribution, the supervisory modules could search for a route back for the next hop in the list of possible hops one by one, only if more load needs to be transferred away from L1. Independent of when the load distribution is implemented, the management can be amended as described above.

In summary, the present invention provides a segmented network in which each segment comprises one or more routers, one or more communications links to provide connectivity between the router(s) and a segment management module. The segment management module uses operational data to predict the future performance of each element. If the predicted performance will breach a threshold value then a data flow may be re-routed. Re-routing between different segments can lead to network management problems and so the present invention discloses methods by which: segments can expand to acquire a router from another segment; segments can subdivide; and segments can merge together, particularly if a segment comprises too few routers.

The expansion, merging, division, and contraction methods described above are applicable to any segmented network with a management module associated with one or more segments. It will be understood that it is not necessary to have a supervisory management module for the implementation and therefore is not restricted to a having module 320. Moreover, module 300 need not be predictive and could be simply reactive like traditional network management entities

It will be understood that some aspects of the present invention, may be implemented by executing computer code on a general purpose computing apparatus. It should be understood that the structure of the general purpose computing apparatus is not critical as long as it is capable of executing the computer code which performs a method according to the present invention. Such computer code may be deployed to such a general purpose computing apparatus via download, for example via the internet, or on some physical media, for example, DVD, CD-ROM, USB memory stick, etc.

**Claims**

1. A communications network, the communications network being partitioned into a plurality of network segments, each of the plurality of the network segments comprising a segment management module, a plurality of network elements and a plurality of communications links, the plurality of network elements being interconnected by the plurality of communications links, the network being configured such that, in operation:

   i) each of the segment management modules receives operational data from the plurality of network elements in its respective network segment;
   ii) on the basis of operational data received from the plurality of network elements, each segment management module determines the future performance of the plurality of network elements in the respective network segment;
   iii) if a segment management module determines that the future performance of one or more of the plurality of network elements in the respective network segment will be less than a threshold value, re-routing one or more data flows, to a further segment; and
   iv) reconfiguring one or more of the segments carrying the one or more data flows.

2. A communications network according to Claim 1, wherein one of the network segments expands to acquire a router from a further network segment.

3. A communications network according to Claim 1, wherein one of the network segments separates to form a plurality of sub-segments, each of the plurality of sub-segments comprising one or more routers.

4. A communications network according to Claim 1, wherein two or more network segments merge to form a new network segment.

5. A communications according to Claim 4, wherein the merger of the two or more network segments is initiated when one of the network segments comprises fewer routers than a predetermined threshold value.

6. A method of operating a communications network, the communications network being partitioned into a plurality of network segments; each of the plurality of the network segments comprising:

   a segment management module;
   a plurality of network elements; and
   a plurality of communications links, the plurality of network elements being interconnected by the plurality of communications links,
   the method comprising the steps of:

   i) each of the segment management modules receiving operational data from the plurality of network elements in its respective network segment;
   ii) each of the segment management module determining the future performance of the plurality of network elements in the respective network segment on the basis of operational data received from the plurality of network elements,;
   iii) if a segment management module determines that the future performance of one or more of the plurality of network elements in the respective network segment will be less than a threshold value, re-routing one or more data flows, to a further segment; and
   iv) reconfiguring one or more of the segments carrying the one or more data flows.

7. A data carrier device comprising computer executable code for performing a method according to Claim 6.

Figure 1

Figure 2

300

220

210

230

200

Figure 3

EP 2 469 762 A1

Figure 4

Figure 5

Figure 6

Figure 7

Figure 8

EP 2 469 762 A1

Figure 9

Figure 10

200A

210A

210B

300A

210E

L2

L5

L6

L7

L3

320₁

200B

210D

210C

300B

EP 2 469 762 A1

24

Europäisches
Patentamt
European
Patent Office
Office européen
des brevets

**EUROPEAN SEARCH REPORT**

Application Number

EP 10 25 2221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/159021 A1 (ASGHAR NAEEM [US] ET AL) 20 July 2006 (2006-07-20) * abstract * * paragraph [0036] - paragraph [0037] * * paragraph [0052] - paragraph [0054] * * paragraph [0063] - paragraph [0065] * * paragraph [0081] * ----- | 1-7 | INV. H04L12/26 H04L12/24 H04L12/56 |
| A | WO 02/080458 A1 (NOKIA CORP [FI]; LAIHO JAANA [FI]; HOEGLUND ALBERT [FI]; RAIVIO KIMMO) 10 October 2002 (2002-10-10) * abstract * * claim 1 * * figure 5 * * page 20, line 17 - page 21, line 29 * ----- | 1-7 | |
| A | US 2009/028056 A1 (RAHMAN MOSHIUR [US] ET AL) 29 January 2009 (2009-01-29) * abstract * * claims 1,4 * * figure 3 * * paragraph [0018] - paragraph [0024] * ----- | 1-7 | |
| A | EP 1 473 890 A2 (HARRIS CORP [US]) 3 November 2004 (2004-11-03) * abstract * * paragraph [0041] * * claims 1-6 * * figure 3 * * paragraph [0025] - paragraph [0032] * ----- | 1-7 | TECHNICAL FIELDS SEARCHED (IPC) H04L |

The present search report has been drawn up for all claims

| Place of search | Date of completion of the search | Examiner |
|---|---|---|
| Munich | 21 September 2011 | Bub, Armin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT**

**ON EUROPEAN PATENT APPLICATION NO.**                    EP 10 25 2221

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2011

| Patent document cited in search report | | Publication date | Patent family member(s) | | Publication date |
|---|---|---|---|---|---|
| US 2006159021 | A1 | 20-07-2006 | NONE | | |
| WO 02080458 | A1 | 10-10-2002 | AT | 413744 T | 15-11-2008 |
| | | | EP | 1374486 A1 | 02-01-2004 |
| | | | US | 2004117226 A1 | 17-06-2004 |
| US 2009028056 | A1 | 29-01-2009 | NONE | | |
| EP 1473890 | A2 | 03-11-2004 | AU | 2004201584 A1 | 18-11-2004 |
| | | | CA | 2464996 A1 | 30-10-2004 |
| | | | JP | 3955579 B2 | 08-08-2007 |
| | | | JP | 2004336767 A | 25-11-2004 |
| | | | NO | 20041835 A | 01-11-2004 |
| | | | US | 2004218582 A1 | 04-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 10250540 A

**Non-patent literature cited in the description**

- **T MITCHELL.** Machine Learning. McGraw-Hill Science/Engineering/Math, 1997